# EUROPEAN PATENT SPECIFICATION

(11) **EP 1 443 824 B1**
(45) Date of publication and mention of the grant of the patent: **08.11.2006**
(21) Application number: 02785074.2
(22) Date of filing: 10.10.2002
(51) Int. Cl.: A22B 7/00

(54) **APPARATUS AND METHOD FOR CUTTING MIDDLES**
VORRICHTUNG UND VERFAHREN ZUM ZERTEILEN VON KARKASSENMITTEN
PROCEDE ET DISPOSITIF DE DECOUPE DE GROS DE BOEUF

(30) Priority: 16.10.2001 DK 200101519
(43) Date of publication of application: 11.08.2004
(73) Proprietor: Slagteriernes Forskningsinstitut, 4000 Roskilde (DK)
(72) Inventor: CHRISTENSEN, Flemming, H., DK-3400 Hilleroed (DK); FOLKMANN, Peter, DK-4140 Borup (DK); MOELLER, Helge, DK-2920 Charlottenlund (DK)
(74) Representative: Elsworth, Dominic Stephen
(86) International application number: PCT/DK2002/000679
(87) International publication number: WO 2003/032739

(56) References cited:
- EP-A1- 0 714 607
- WO-A1-94/24873
- DE-A1- 3 516 083
- DK-B1- 173 412

## Description

The present invention relates to an apparatus for cutting middles, which apparatus comprises a mainly linear conveyor with conveyor elements for seizing and holding a middle by the spinal column and moving it in the lengthways direction of the spinal column while being held with the split surface of the spinal column in contact with mainly horizontal surfaces on the conveyor elements and the inner side of the spinal column in contact with oblique surfaces on the elements, and with the spinal column pressed into the wedge-shaped openings which the horizontal surfaces and the oblique surfaces form together, and a cutting device for cutting the middle in mainly the lengthways direction of the spinal column during the transport of the middle past the device.

A similar device, respectively a similar method is known from EP-A-0 714 607.

Danish Patent No. 173.412 B1 (Slagteriernes Forskningsinstitut) describes an apparatus and a method for seizing and holding a middle of a carcass by the spinal column and moving it on a mainly linear conveyor in the lengthways direction of the spinal column past a stationary saw which carries out a cutting operation. During transport, the split surface of the spinal column is in contact with the mainly horizontal surfaces on the conveyor elements in the conveyor and the inner side of the spinal column is in contact with oblique surfaces on the elements. The spinal column is held pressed into the wedge-shaped openings, which the horizontal surfaces and the oblique surfaces form together. The apparatus may, for example, be arranged to cut off the rib top from a middle.

Tests of such an apparatus have shown that the rib top is not cut off correctly when the middle is from a carcass, which has been split unevenly, i.e. where sawing of the spinal column has been performed slightly to one side of the spinal column's symmetrical plane.

However, correct sawing off of rib top is important, because otherwise either valuable meat will be lost or subsequent processing of the meat has to be performed in a demanding manual process.

The object of the present invention is to provide an improvement of the apparatus, which can compensate for uneven splitting.

This is achieved in the apparatus of the invention, which is characterised in that it has
- a measurement system located upstream of the cutting device which system is designed to measure horizontal positions of the inner surface of the middle a pre-determined distance below the horizontal surfaces of the conveyor elements while the middle is being conveyed past the measurement system,
- a calculation unit designed to convert measurement data from this system into control signals and
- drive means arranged to adjust the positions of the cutting device as a function of the control signals in a plane perpendicular to the transport direction of the middle during transport of the middle past the device.

In measurement of horizontal positions of the inner side of the middle below the spinal column it has proved possible to detect by how much the spinal column has been overcut or undercut during splitting, i.e. by how much the spinal column lies too high or too low in the apparatus compared to the correct cutting position. By means of this information, the height of the cutting device can be automatically adjusted so that a correct cut can be made in the middle by means of the apparatus.

It is mainly the position of the side of the ribs and the transverse processes, which are measured.

Advantageous embodiments of the apparatus of the invention are given in Claims 2-6.

The invention also relates to a method for cutting middles wherein conveyor elements on a mainly linear conveyor seize and hold a middle by the spinal column and move it in the lengthways direction of the spinal column while being held with the split surface of the spinal column in contact with mainly horizontal surfaces on the conveyor elements and the inside of the spinal column in contact with oblique surfaces on the elements, and with the spinal column pressed into the wedge-shaped openings which the horizontal surfaces and the oblique surfaces form together, and wherein the middle is cut in mainly the lengthways direction of the spinal column during the transport of the middle past a cutting device.

The method according to the invention is characterised in that horizontal positions on the inner surface of the middle are measured a pre-determined distance below the horizontal surfaces of the conveyor elements while the middle is transported past a measurement system arranged upstream of the cutting device, that measurement data from this system are converted into control signals by means of a calculation unit and that the positions of the cutting device in a plane perpendicular to the transport direction of the middle is adjusted automatically as a function of the control signals during the transport of the middle past the device.

Advantageous embodiments of the method according to the invention are stated in Claims 9-10.

In this document, the term middle shall mean particularly a middle from a pig carcass.

The cutting device can for instance be arranged and adjusted to cut off the rib top, to cut the meat free of the spinal column, to cut through the ribs at the rib heads or to carry out other cutting work on the middle at the spinal column.

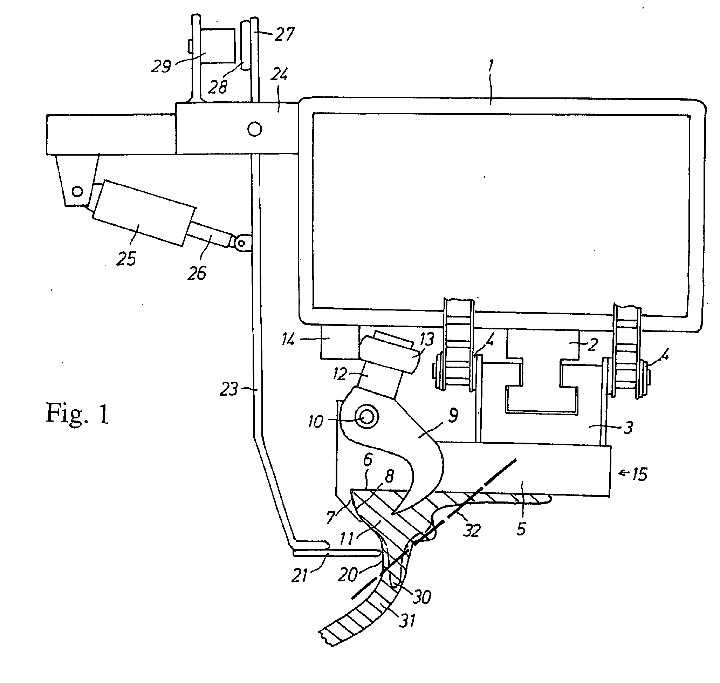

The invention is explained in greater detail in the following with reference to the drawings, in which
- Fig. 1 shows part of an apparatus according to the invention for automatic cutting off of rib top on middles, seen in vertical section,
- Fig. 2 shows a sensor shoe in the apparatus of Fig. 1, seen from above, and
- Fig. 3 shows an example of the horizontal displacements of the spinal column in the apparatus in the case of uneven splitting.

The apparatus is of the design described in Danish Patent No. 173.412 B1, but with additional means for compensating for uneven splitting of the carcass.

It comprises a long mounting beam 1, bearing on its underside an I-shaped rail 2, from which there hang a series of connecting blocks 3. These are mutually connected by means of chain links 4, which form a circulating chain driven by gearwheels in both ends of beam 1.

Onto the connecting blocks 3 are mounted fixing pieces 5, which on the underside have a horizontal surface 6, on which the split side of the spinal column can rest and a projection 7 with an oblique surface 8, on which the curved side of the spinal column can rest. The angle between surface 6 and surface 8 can be 50 to 80°. On the fixing piece 5 is mounted a hook 9, which can pivot on a shaft 10 and thereby pin the spinal column 11 in the V-shaped opening formed by the two surfaces 6 and 8. The hook is pivoted by means of a peg 12 with a roller 13 which runs on the side of a rail 14 mounted on the underside of the mounting beam 1. In the situation with no fixation the rail 14 runs at a great distance from the I-rail 2, so that the hook tip lies over the horizontal surface 6. At the point on the mounting beam 1 where the spinal column has been positioned in the V-shaped opening, rail 14 is moved closer to the I-rail 2 so that roller 13, during the transport of fixing piece 5 along beam 1, is actuated to the right and the hook tip is impelled into the spinal column 11, thus fixing it to piece 5.

The connecting block 3, the fixing piece 5, the hook 9 and the peg 12 with roller 13 together comprise a conveyor element 15 for a section of the spinal column.

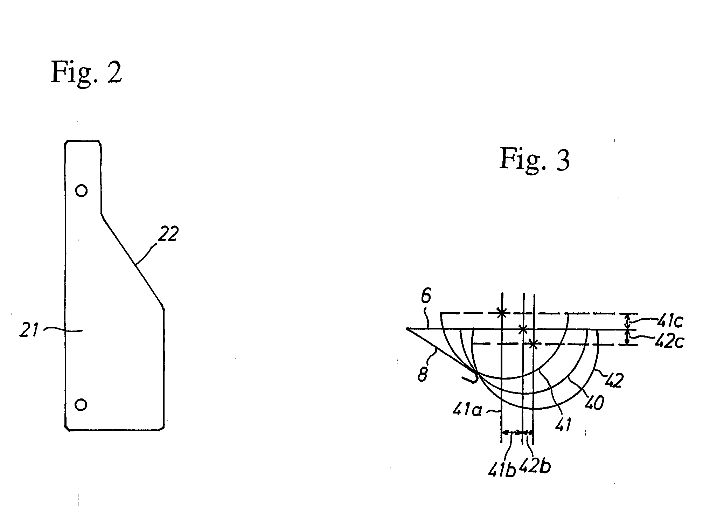

The means of the apparatus for compensating for uneven splitting comprises a measurement system, which continuously measures horizontal positions of the inner side 20 of the middle below the spinal column as the middle is moved past the system. This comprises a measuring shoe 21 with an oblique front edge 22 (Fig. 2). The shoe is mounted on an arm 23, which is held and swivels in a bracket 24 on the mounting beam 1. In operation the shoe 21 is actuated in the direction of the inner side 20 of the middle a pre-determined distance below the horizontal surface 6 (e.g. 30 to 55 mm), as a piston rod 26 of a cylinder 25 presses on arm 23. The arm 23 has an extension 27 on the other side of its swivel axle. A metal plate 28 is mounted on the extension. An inductive sensor 29 on the bracket 24 is arranged to sense the position of plate 28. The sensor emits a signal related to the shoe's 21 horizontal position, i.e. the position of inner side 20. At the hip end the surface sensed is the surface of the transverse processes 30, while at the neck end of the middle it is the surface of ribs 31. For each centimetre the middle is moved by the conveyor, measurement data are recorded from the inductive sensor 29 into a calculation unit, which by means of an algorithm converts them to control signals. These control an aggregate, which adjust the vertical position of a rib top saw, the saw blade of which is indicated by line 32. The saw is mounted downstream of the measurement system.

Also in the measurement system is a light relay or similar for measuring the length of the middle during transport past the relay.

The device functions as follows:

A middle is moved into the apparatus and the spinal column is seized and held by the conveyor elements 15, which bring it to the area on the conveyor where the measurement system is mounted. In the starting position the arm 23 has a position to the right, so that shoe 21 protrudes slightly in front of the middle. When the front edge of the middle hits the oblique side 22 of the shoe, this is pressed to the left until the straight edge at the end of side 22 starts to slide over the inside of the middle. The cylinder 25 holds the shoe pressed against the inside of the middle and its positions are measured by means of the inductive sensor 29 as the middle is moved past. The measurements, together with the measurement of the length of the middle, are processed in the calculation unit, which is connected with the inductive sensor and the light relay, and thereby a series of control signal values are obtained, each corresponding to a defined position of the middle in the transport direction. For example, the position of the first rib can be determined by means of the length of the middle, so that when cutting opposite the ribs, a "fixed" height setting of the saw can be used based on all the measurements of the transverse processes and when cutting opposite the transverse processes, another, continuous height setting of the saw is used, calculated by means of the individual measurements of the transverse processes.

When the middle comes to the rib top saw mounted downstream of the measurement system, the aggregate adjust the calculated height of the saw for cutting opposite the ribs, and when sawing is subsequently carried out opposite the transverse processes, the aggregate adjust the height continuously, e.g. for each centimetre that the middle is conveyed, controlled by the control signal values. This compensates for uneven splitting and a correct sawing of rib top is achieved. The conveyor includes a stroke setting system so there is concordance between the individual measurements and the height settings of the saw.

Fig. 3 illustrates three different outcomes of a splitting process. The spinal column in a middle is assumed to have a cross-section corresponding approximately to a semicircle, where the ends of the semicircle are joined by a straight line section. This line section lies against the horizontal surface 6 on the fixing piece, while the circular part is in contact with oblique surface 8. Semicircle 40 illustrates the case where the spinal column has been correctly split in the middle. There is no need for correction of the rib top saw, which is in O-position. Semicircle 41 illustrates the case where the splitting has been uneven and too much has been taken from the spinal column part of the middle. This has the effect that circle 41 is lying to the left of circle 40. The degree of unevenness of the split is measured by sensing the inner side of the middle, represented by line 41a. The horizontal displacement 41b of semicircle 41 compared to circle 40 can be converted into a measurement of how much has been incorrectly cut from the spinal column, namely section 41c. The height of the rib top saw can now be adjusted so that no valuable meat is cut away.

Semicircle 42 illustrates the case where the splitting is uneven the other way, so there is too much spinal column on the middle. Circle 42 lies to the right of circle 40 and as before the horizontal displacement 42b is measured and it is calculated how much has been incorrectly cut off, namely the vertical section 42c. In this case the height of the rib top saw needs to be reduced so that the entire rib top is cut off.

Unevenness in splitting may vary along the lengthways direction of the middle. Unevenness is normally greatest at the hip end and less at the neck end, but can vary in between. The apparatus described is able to compensate for this, as the position of the rib top saw is adjusted as a function of the measured unevenness.

## Claims

1. Apparatus for cutting middles which apparatus comprises a mainly linear conveyor with conveyor elements (15) for seizing and holding a middle by the spinal column (11) and moving it in the lengthways direction of the spinal column while being held with the split surface of the spinal column in contact with mainly horizontal surfaces (6) on the conveyor elements (15) and the inner side (20) of the spinal column in contact with oblique surfaces (8) on the elements, and with the spinal column pressed into the wedge-shaped openings which the horizontal surfaces (6) and the oblique surfaces (8) form together, and a cutting device (32) for cutting the middle in mainly the lengthways direction of the spinal column during the transport of the middle past the device, **characterised in that** the apparatus has
- a measurement system (21, 29) located upstream of the cutting device (32) which system is designed to measure horizontal positions of the inner surface (20) of the middle a pre-determined distance below the horizontal surfaces (6) of the conveyor elements (14) while the middle is being conveyed past the measuring system,
- a calculation unit designed to convert measurement data from this system into control signals and
- drive means arranged to adjust the positions of the cutting device (32) as a function of the control signals in a plane perpendicular to the transport direction of the middle during transport of the middle past the device.

2. Apparatus according to Claim 1, **characterised in that** the calculation unit is designed to calculate how far the split surface of the spinal column is displaced to one side or the other compared to the symmetrical plane of the spinal column.

3. Apparatus according to Claim 1, **characterised in that** the cutting device (32) is continually adjusted over part or the whole of the length of the middle, controlled by the control signals, which are calculated from the measurement data of the measurement system.

4. Apparatus according to Claim 1, **characterised in that** the height of the cutting device (32) is adjusted controlled by the control signals.

5. Apparatus according to Claim 1, **characterised in that** the measurement system comprises a mechanical sensor (21) which is pressed in against the inner surface (20) of the middle and actuates a position meter (29).

6. Apparatus according to Claim 1, **characterised in that** means are provided to coordinate the position settings of the cutting device (32) with the measurement data/control signals during the transport of the middle past the cutting device.

7. Apparatus according to Claim 1, **characterised in that** the surface (20) of the middle is sensed opposite the transverse processes (30) and opposite the ribs (31) at the rib heads.

8. Method for cutting middles, wherein conveyor elements (15) on a mainly linear conveyor seize and hold a middle by the spinal column (11) and move it in the lengthways direction of the spinal column while being held with the split surface of the spinal column in contact with mainly horizontal surfaces (6) on the conveyor elements (15) and the inside of the spinal column in contact with oblique surfaces (8) on the elements, and with the spinal column pressed into the wedge-shaped openings, which the horizontal surfaces (6) and the oblique surfaces (8) form together, and wherein the middle is cut in mainly the lengthways direction of the spinal column during the transport of the middle past a cutting device (32), **characterised in that** horizontal positions of the inner surface (20) of the middle are measured a pre-determined distance below the horizontal surfaces (6) of the conveyor elements (14) while the middle is transported past a measurement system arranged upstream of the cutting device (32), that measurement data from this system are converted into control signals by means of a calculation unit and that the positions of the cutting device (32) in a plane perpendicular to the transport direction of the middle is adjusted automatically as a function of the control signals during the transport of the middle past the device.

9. Method according to Claim 8, **characterised in that** the cutting device (32) is adjusted continually over a part or the whole of the length of the middle, controlled by the control signals calculated from the measurement data of the measurement system.

10. Method according to claim 8, **characterised in that** the height of the cutting device (32) is adjusted, controlled by the control signals.

## Patentansprüche

1. Vorrichtung zum Schneiden von Mittelstücken, wobei die Vorrichtung einen im Wesentlichen linearen Förderer mit Förderelementen (15) zum Greifen und Halten eines Mittelstücks an der Wirbelsäule (11) und Bewegen desselben in Längsrichtung der Wirbelsäule, während es mit der geteilten Oberfläche der Wirbelsäule in Kontakt mit im Wesentlichen horizontalen Oberflächen (6) an den Förderelementen (15) und der Innenseite (20) der Wirbelsäule in Kontakt mit geneigten Oberflächen (8) an den Elementen und mit der Wirbelsäule in die keilförmigen Öffnungen, die die horizontalen Oberflächen (6) und die geneigten Oberflächen (8) zusammen bilden, gedrückt gehalten wird, und eine Schneideinrichtung (32) zum Schneiden des Mittelstücks im Wesentlichen in der Längsrichtung der Wirbelsäule während des Transports des Mittelstücks an der Einrichtung vorbei umfasst, **dadurch gekennzeichnet, dass** die Vorrichtung
- ein Messsystem (21, 29), das der Schneideinrichtung (32) vorgeschaltet ist, wobei das System ausgebildet ist, um horizontale Positionen der Innenfläche (20) des Mittelstücks in einem vorbestimmten Abstand unter den horizontalen Oberflächen (6) der Förderelemente (14) zu messen, während das Mittelstück an dem Messsystem vorbei gefördert wird,
- eine Berechnungseinheit, die ausgebildet ist, um Messdaten von diesem System in Steuersignale umzuwandeln, und
- Antriebsmittel, die angeordnet sind, um die Positionen der Schneideinrichtung (32) als Funktion der Steuersignale in einer Ebene senkrecht zu der Transportrichtung des Mittelstücks während des Transports des Mittelstücks an der Einrichtung vorbei einzustellen,
aufweist.

2. Vorrichtung nach Anspruch 1, **dadurch gekennzeichnet, dass** die Berechnungseinheit ausgebildet ist, um zu berechnen, wie weit die geteilte Oberfläche der Wirbelsäule verglichen mit der Symmetrieebene der Wirbelsäule zu der einen oder der anderen Seite verlagert ist.

3. Vorrichtung nach Anspruch 1, **dadurch gekennzeichnet, dass** die Schneideinrichtung (32) gesteuert von den Steuersignalen, die aus den Messdaten des Messsystems berechnet werden, über einen Teil der Länge oder über die gesamte Länge des Mittelstücks kontinuierlich eingestellt wird.

4. Vorrichtung nach Anspruch 1, **dadurch gekennzeichnet, dass** die Höhe der Schneideinrichtung (32) gesteuert durch die Steuersignale eingestellt wird.

5. Vorrichtung nach Anspruch 1, **dadurch gekennzeichnet, dass** das Messsystem einen mechanischen Sensor (21) umfasst, der nach innen gegen die Innenfläche (20) des Mittelstücks gedrückt wird und ein Positionsmessgerät (29) betätigt.

6. Vorrichtung nach Anspruch 1, **dadurch gekennzeichnet, dass** Mittel vorgesehen sind, um während des Transports des Mittelstücks an der Schneideinrichtung vorbei die Positionseinstellungen der Schneideinrichtung (32) mit den Messdaten/Steuersignalen zu koordinieren.

7. Vorrichtung nach Anspruch 1, **dadurch gekennzeichnet, dass** die Oberfläche (20) des Mittelstücks gegenüber den Querfortsätzen (30) und gegenüber den Rippen (31) an den Rippenköpfen ertastet wird.

8. Verfahren zum Schneiden von Mittelstücken, wobei Förderelemente (15) an einem im Wesentlichen linearen Förderer ein Mittelstück an der Wirbelsäule (11) greifen und halten und es in Längsrichtung der Wirbelsäule bewegen, während es mit der geteilten Oberfläche der Wirbelsäule in Kontakt mit im Wesentlichen horizontalen Oberflächen (6) an den Förderelementen (15) und der Innenseite der Wirbelsäule in Kontakt mit geneigten Oberflächen (8) an den Elementen und mit der Wirbelsäule in die keilförmigen Öffnungen, die die horizontalen Oberflächen (6) und die geneigten Oberflächen (8) zusammen bilden, gedrückt gehalten wird und wobei das Mittelstück während des Transports des Mittelstücks an einer Schneideinrichtung (32) vorbei im Wesentlichen in der Längsrichtung der Wirbelsäule geschnitten wird, **dadurch gekennzeichnet, dass** horizontale Position der Innenfläche (20) des Mittelstücks an einem vorbestimmten Abstand unter den horizontalen Oberflächen (6) der Förderelemente (14) gemessen werden, während das Mittelstück an einem Messsystem vorbei transportiert wird, das der Schneideinrichtung (32) vorgeschaltet angeordnet ist, dass Messdaten von diesem System mittels einer Berechnungseinheit in Steuersignale umgewandelt werden und dass die Positionen der Schneideinrichtung (32) in einer Ebene senkrecht zu der Transportrichtung des Mittelstücks während des Transports des Mittelstücks an der Einrichtung vorbei automatisch als Funktion der Steuersignale eingestellt werden.

9. Verfahren nach Anspruch 8, **dadurch gekennzeichnet, dass** die Schneideinrichtung (32) gesteuert durch die Steuersignale, die aus den Messdaten des Messsystems berechnet werden, über einen Teil der Länge oder über die gesamte Länge des Mittelstücks eingestellt wird.

10. Verfahren nach Anspruch 8, **dadurch gekennzeichnet, dass** die Höhe der Schneideinrichtung (32) gesteuert durch die Steuersignale eingestellt wird.

## Revendications

1. Appareil destiné à couper des carcasses, lequel appareil comprend un convoyeur sensiblement linéaire avec des éléments de convoyeur (15) destinés à saisir et à supporter une carcasse par la colonne vertébrale (11) et à la déplacer dans le sens de la longueur de la colonne vertébrale tout en étant maintenue avec la surface fendue de la colonne vertébrale en contact avec des surfaces sensiblement horizontales (6) sur les éléments de convoyeur (15) et la face interne (20) de la colonne vertébrale en contact avec des surfaces obliques (8) sur les éléments, et avec la colonne vertébrale appliquée dans les ouvertures en forme de coin que les surfaces horizontales (6) et les surfaces obliques (8) forment entre elles, et un dispositif de coupe (32) destiné à couper les carcasses principalement dans le sens de la longueur de la colonne vertébrale au cours du transport de la carcasse devant le dispositif, **caractérisé en ce que** l'appareil comporte :
un dispositif de mesure (21, 29) situé en amont du dispositif de coupe (32), lequel dispositif est conçu afin de mesurer des positions horizontales de la surface interne (20) de la carcasse à une distance prédéterminée au-dessous des surfaces horizontales (6) des éléments de convoyeur (14) pendant que la carcasse est transférée devant le dispositif de mesure,
une unité de calcul définie afin de transformer des données de mesure à partir de ce dispositif en signaux de commande, et
un moyen d'entraînement agencé de manière à régler les positions du dispositif de coupe (32) en fonction des signaux de commande dans un plan perpendiculaire à la direction de transport de la carcasse au cours du transport de la carcasse devant le dispositif.

2. Appareil selon la revendication 1, **caractérisé en ce que** l'unité de calcul est conçue afin de calculer de combien la surface fendue de la colonne vertébrale est décalée vers un côté ou l'autre par rapport au plan de symétrie de la colonne vertébrale.

3. Appareil selon la revendication 1, **caractérisé en ce que** le dispositif de coupe (32) est ajusté en continu sur une partie ou la totalité de la longueur de la carcasse, de manière commandée par les signaux de commande, qui sont calculés à partir des données de mesure du dispositif de mesure.

4. Appareil selon la revendication 1, **caractérisé en ce que** la hauteur du dispositif de coupe (32) est ajustée de manière commandée par les signaux de commande.

5. Appareil selon la revendication 1, **caractérisé en ce que** le dispositif de mesure comprend un capteur mécanique (21) qui est pressé contre la surface interne (20) des carcasses et active un dispositif de mesure de position (29).

6. Appareil selon la revendication 1, **caractérisé en ce que** des moyens sont agencés afin de coordonner les réglages de position du dispositif de coupe (32) avec les données de mesure/signaux de commande au cours du transport de la carcasse devant le dispositif de coupe.

7. Appareil selon la revendication 1, **caractérisé en ce que** la surface (20) de la carcasse est détectée à l'opposé des extensions transversales (30) et à l'opposé des côtes au niveau des têtes de côte.

8. Procédé de coupe de carcasses, dans lequel des éléments de convoyeur (15) sur un convoyeur sensiblement linéaire saisissent et supportent une carcasse par la colonne vertébrale (11) et la déplacent dans le sens de la longueur de la colonne vertébrale alors qu'elle est maintenue avec la surface fendue de la colonne vertébrale en contact avec des surfaces sensiblement horizontales (6) sur les éléments de convoyeur (15) et l'intérieur de la colonne vertébrale en contact avec les surfaces obliques (8) sur des éléments, et avec la colonne vertébrale pressée dans les ouvertures en forme de coin, que forment entre elles les surfaces horizontales (6) et les surfaces obliques (8), et dans lequel la carcasse est coupée sensiblement dans le sens de la longueur de la colonne vertébrale au cours du transport de la carcasse devant un dispositif de coupe (32), **caractérisé en ce que** les positions horizontales de la surface interne (20) de la carcasse sont mesurées à une distance prédéterminée au-dessous des surfaces horizontales (6) des éléments de convoyeur (14) pendant que la carcasse est transportée devant un dispositif de mesure agencé en amont du dispositif de coupe (32), **en ce que** des données de mesure à partir de ce dispositif sont transformées en signaux de commande au moyen d'une unité de calcul et **en ce que** les positions du dispositif de coupe (32) dans un plan perpendiculaire à la direction de transport de la carcasse sont ajustées automatiquement en fonction des signaux de commande au cours du transport de la carcasse devant le dispositif.

9. Procédé selon la revendication 8, **caractérisé en ce que** le dispositif de coupe (32) est ajusté en continu au-dessus d'une partie ou de la totalité de la longueur de la carcasse, de manière commandée par les signaux de commande calculés à partir des données de mesure du dispositif de mesure.

10. Procédé selon la revendication 8, **caractérisé en ce que** la hauteur du dispositif de coupe (32) est ajustée, de manière commandée par les signaux de commande.
